(19) **Europäisches Patentamt / European Patent Office / Office européen des brevets**

(11) **EP 2 786 202 B1**

(12) **FASCICULE DE BREVET EUROPEEN**

(45) Date de publication et mention
de la délivrance du brevet:
**21.08.2019 Bulletin 2019/34**

(21) Numéro de dépôt: **12806530.7**

(22) Date de dépôt: **16.11.2012**

(51) Int Cl.:
**G02C 13/00** *(2006.01)*    **B24B 9/14** *(2006.01)*

(86) Numéro de dépôt international:
**PCT/FR2012/000465**

(87) Numéro de publication internationale:
**WO 2013/079821 (06.06.2013 Gazette 2013/23)**

(54) **PROCÉDÉ DE PRÉPARATION D'UNE LENTILLE OPHTALMIQUE**

PROCESS ZUR VORBEREITUNG EINER OPHTHALMISCHEN LINSE

PROCESS OF PREPARATION OF AN OPHTHALMIC LENS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2011 FR 1103651**

(43) Date de publication de la demande:
**08.10.2014 Bulletin 2014/41**

(73) Titulaire: **Essilor International
94220 Charenton-le-Pont (FR)**

(72) Inventeurs:
• **LUC, Martin
F-94220 Charenton Le Pont (FR)**
• **HOLVOET VERMAUT, Benoit
F-94220 Charenton Le Pont (FR)**
• **DUBOIS, Frédéric
F-94220 Charenton Le Pont (FR)**

(74) Mandataire: **Jacobacci Coralis Harle
32, rue de l'Arcade
75008 Paris (FR)**

(56) Documents cités:
**EP-A1- 1 642 678    EP-A1- 2 305 423**

EP 2 786 202 B1

**Description**

DOMAINE TECHNIQUE AUQUEL SE RAPPORTE L'INVENTION

La présente invention concerne de manière générale la préparation de lentilles ophtalmiques brutes, c'est-à-dire de lentilles non encore détourées à la forme des entourages dans lesquelles elles sont destinées à être emboîtées.

Elle concerne plus particulièrement un procédé de préparation d'une lentille ophtalmique à emboîter dans un entourage d'une monture de lunettes, comportant :

- une opération de détermination de la géométrie bidimensionnelle d'un profil longitudinal dudit entourage,
- une opération de centrage au cours de laquelle ledit profil longitudinal est positionné dans un référentiel lié à la lentille ophtalmique,
- une opération d'acquisition de la géométrie d'au moins une partie d'une face optique de la lentille ophtalmique, par palpage avec ou sans contact dudit profil longitudinal sur ladite face optique de la lentille ophtalmique,
- une opération de calcul d'une consigne de traitement de la lentille ophtalmique en fonction de la géométrie et de la position du profil longitudinal dans le référentiel lié à la lentille ophtalmique, et en fonction de la géométrie de ladite partie de ladite face optique de la lentille ophtalmique, et
- une opération de traitement de la lentille ophtalmique suivant ladite consigne de traitement.

ARRIERE-PLAN TECHNOLOGIQUE

La partie technique du métier de l'opticien consiste à monter une paire de lentilles ophtalmiques sur une monture de lunettes sélectionnée par un porteur.

Ce montage se décompose en trois opérations principales :

- l'acquisition des contours des entourages de la monture de lunettes sélectionnée,
- le centrage des lentilles qui consiste à reporter les deux contours acquis sur les deux lentilles ophtalmiques, de telle manière qu'une fois détourées suivant ces deux contours puis montées sur la monture de lunettes, ces lentilles se trouvent convenablement centrées en regard des pupilles du porteur, puis
- l'usinage des lentilles qui consiste à les découper selon ces contours.

Dans le cadre de la présente invention, on s'intéresse plus particulièrement aux montures de lunettes à entourages, c'est-à-dire aux montures de lunettes cerclées et semi-cerclées (« à arcades »).

Pour ces montures, l'objectif concret de l'opticien est de découper les lentilles ophtalmiques de manière à ce qu'elles puissent mécaniquement et esthétiquement s'adapter aux formes des entourages, tout en s'assurant que ces lentilles exercent au mieux les fonctions optiques pour lesquelles elles ont été conçues.

L'opération d'usinage comprend en particulier, dans le cas des montures cerclées, une étape de biseautage permettant de former sur la tranche de la lentille une nervure d'emboîtement (communément appelée biseau) apte à s'emboîter dans une rainure (communément appelée drageoir) qui court le long de la face intérieure de l'entourage correspondant de la monture.

L'opération d'usinage comporte en revanche, dans le cas des montures semi-cerclées, une étape de rainage permettant de former sur la tranche de la lentille une rainure d'emboîtement. Lors du montage de la lentille dans l'entourage, cette rainure d'emboîtement s'engage sur une nervure qui court le long de la face intérieure du demi-cercle (ou « arcade ») correspondant de la monture. La lentille ophtalmique est alors maintenue en appui contre cette arcade à l'aide d'un fil, généralement en nylon (éventuellement en métal), qui s'engage dans la rainure d'emboîtement et dont les extrémités se raccordent aux extrémités de l'arcade.

Quel que soit le type de la monture de lunettes sélectionnée, les opérations d'acquisition et d'usinage doivent être réalisées avec soin de manière que la lentille puisse parfaitement s'emboîter dans son entourage, esthétiquement, sans effort et « du premier coup », c'est-à-dire sans nécessiter de reprise d'usinage ou de mise à longueur du fil nylon.

Malgré le soin apporté aux différentes opérations, on constate à l'issue du détourage des lentilles des problèmes d'emboîtement ou d'esthétisme du montage.

Il peut alors s'avérer nécessaire, pour écarter tout risque de déboîtement de la lentille hors de son entourage, de reprendre l'usinage de la lentille et/ou de modifier la longueur du fil nylon, ce qui s'avère fastidieux à réaliser.

Il est alors connu, pour améliorer la qualité du détourage de la lentille ophtalmique, d'acquérir dans une base de données à la disposition de l'opticien une cartographie des faces avant et arrière des lentilles, afin de pouvoir modéliser l'emboîtement des lentilles dans leurs entourages et de pouvoir détourer les lentilles en fonction du résultat de cette modélisation.

L'inconvénient majeur de cette solution est qu'elle nécessite une base de données mise à jour et à la disposition de l'opticien, ce qui est en pratique rarement le cas. La mise à disposition d'une telle base de données est en effet généralement jugée contraire au degré de confidentialité relatif aux formes des lentilles.

OBJET DE L'INVENTION

Afin de remédier à l'inconvénient précité de l'état de la technique, la présente invention telle que définie dans les revendications propose un procédé permettant de modéliser, sans recourir à une base de données, une partie au moins de la surface d'une lentille ophtalmique.

Plus particulièrement, on propose selon l'invention un procédé tel que défini dans l'introduction, dans lequel ladite opération d'acquisition comporte :

- une étape de calcul, en fonction de la géométrie bidimensionnelle dudit profil longitudinal, des coordonnées bidimensionnelles d'une pluralité de points de mesure situés le long de deux brins longitudinaux distincts qui sont disposés de part et d'autre du profil longitudinal et qui sont choisis de telle sorte qu'ils définissent entre eux une bande qui s'étend le long dudit profil longitudinal, et
- une étape d'examen de ladite face optique de la lentille ophtalmique pour acquérir les coordonnées tridimensionnelles desdits points de mesure en vue de calculer ladite consigne de traitement.

Ainsi, grâce à l'invention, on examine la face optique de la lentille de manière à relever les coordonnées de points situés à proximité du profil longitudinal, ce qui permet de déterminer une cartographie de ladite bande afin de pouvoir notamment approximer la courbure de la lentille dans la zone où elle doit être détourée.

Il est ainsi possible de traiter la lentille (par exemple en la détourant) de manière plus précise, en tenant compte de cette courbure.

D'autres caractéristiques avantageuses et non limitatives du procédé conforme à l'invention sont les suivantes :

- au cours de l'opération de détermination, on acquiert les coordonnées bidimensionnelles d'une pluralité de points élémentaires qui appartiennent au profil longitudinale et qui sont caractéristiques de la géométrie bidimensionnelle du profil longitudinal, et au cours de l'étape de calcul, les points de mesure sont choisis comme étant chacun homologue de l'un des points élémentaires du profil longitudinal ;
- les deux brins longitudinaux sont des homothéties du profil longitudinal ;
- les deux brins longitudinaux sont des transformations à écart constant du profil longitudinal ;
- au cours de l'étape d'examen, ladite face optique de la lentille ophtalmique est palpée suivant les deux brins longitudinaux ;
- au cours de l'étape d'examen, ladite face optique de la lentille ophtalmique est également palpée suivant le profil longitudinal pour acquérir les coordonnées tridimensionnelles de points élémentaires de ce profil longitudinal en vue de calculer ladite consigne de traitement ;
- au cours de l'étape d'examen, on acquiert les coordonnées tridimensionnelles de trois points de l'autre face optique de la lentille ophtalmique et on en déduit le rayon de courbure de cette autre face optique en vue de calculer ladite consigne de traitement ;
- l'opération de traitement comporte une étape de détourage de la lentille ophtalmique ;
- l'opération de traitement comporte une étape de gravure et/ou de tamponnage de la lentille ophtalmique.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique en perspective d'une monture de lunettes cerclée ;
- la figure 2 est une vue schématique en perspective d'une monture de lunettes semi-cerclée ;
- la figure 3 est une vue schématique en perspective d'une lentille ophtalmique brute ;
- la figure 4 est une vue schématique en perspective d'un appareil de lecture de contours ;
- la figure 5 est une vue de face de la lentille ophtalmique de la figue 3, sur laquelle est représenté un profil longitudinal bidimensionnel représentatif de la forme de l'un des entourages de la monture de lunettes de la figure 1 ou 2 ;
- la figure 6 est une vue homologue à celle de la figure 5, sur laquelle sont en outre représentés les brins longitudinaux définis dans la présente invention ; et
- la figure 7 est une vue en coupe axiale de la lentille ophtalmique de la figure 3 lors de son biseautage.

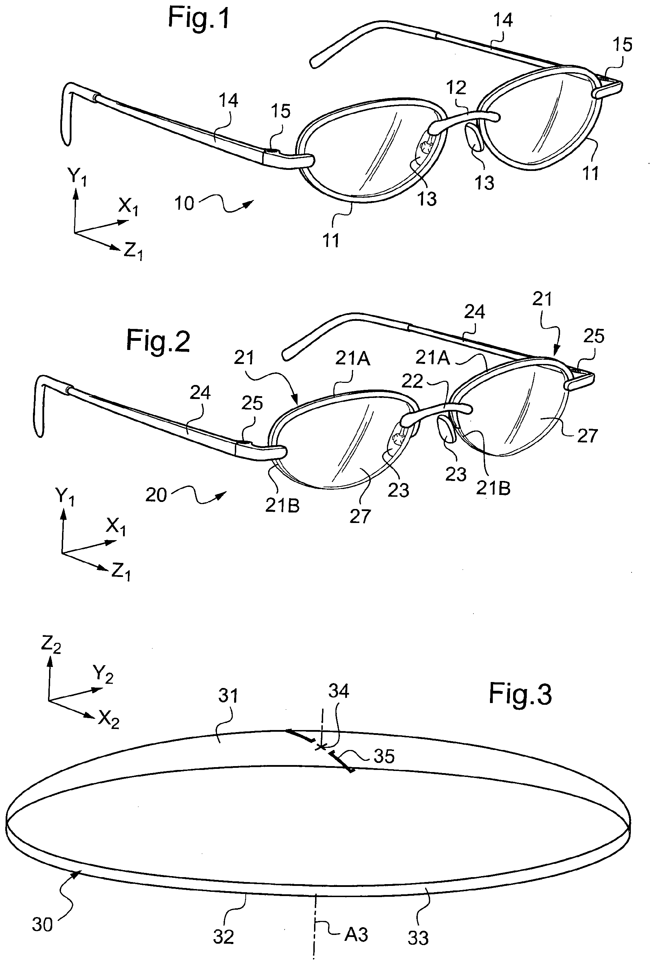

Sur les figures 1 et 2 on a représenté deux montures de lunettes 10, 20 respectivement cerclée et semi-cerclée, comportant chacune deux entourages 11, 21.

Plus particulièrement, sur la figure 1, la monture de lunettes 10 cerclée comporte deux cercles 11 destinés chacun à accueillir une lentille ophtalmique et à être positionnés en regard de l'un des deux yeux du porteur lorsque ce dernier porte ladite monture.

Les deux cercles 11 sont reliés l'un à l'autre par un pont ou pontet 12. Ils sont en outre chacun équipés d'une plaquette nasale 13 apte à reposer sur le nez du porteur et d'une branche 14 apte à reposer sur l'une des oreilles du porteur. Chaque branche 14 est articulée sur le cercle correspondant au moyen d'un barillet 15.

Les deux cercles 11 de la monture de lunettes 10 présentent un bord intérieur dans lequel est ménagée une rainure d'emboîtement, communément appelée drageoir, de section généralement en forme de dièdre.

Sur la figure 2, les entourages 21 de la monture de lunettes 20 semi-cerclée comportent chacun une arcade 21A (ou « demi-cercle ») et un fil nylon 21B, dont les deux bouts sont raccordés aux extrémités de cette arcade 21A. Ces arcades 21A et fils nylon 21B permettent conjointement de maintenir deux lentilles sur la monture de lunettes 20.

Les deux arcades 21A sont reliées l'une à l'autre par un pontet 22. Chaque arcade 21A est équipée d'une plaquette nasale 23 apte à reposer sur le nez du porteur et d'une branche 24 apte à reposer sur l'une des oreilles du porteur. Chaque branche 24 est articulée sur l'arcade 21A correspondante au moyen d'un barillet 25.

Les deux arcades 21A de la monture de lunettes 20 présentent un bord intérieur sur lequel court une nervure d'emboîtement.

Tel que cela apparaît sur la figure 2, la monture de lunettes 20 porte deux lentilles de présentation 27 livrées à l'opticien avec la monture. Ces deux lentilles de présentation 27 seront utilisées comme gabarit de forme pour détourer les lentilles ophtalmiques à monter sur la monture de lunettes 20.

Comme le montre la figure 3, la lentille ophtalmique 30 présente deux faces optiques avant 31 et arrière 32, et une tranche 33.

La face optique avant 31 est ici sphérique et présente un rayon de courbure connu.

La face optique arrière 32 présente en revanche une forme spécifique, permettant à la lentille de corriger avec précision l'acuité visuelle du futur porteur de lunettes.

La tranche 33 de la lentille présente un contour initial circulaire. La lentille est toutefois destinée à être détourée à la forme de l'entourage 11, 21 correspondant de la monture de lunettes 10, 20, de manière à pouvoir être emboîtée dans celui-ci.

Dans le cas où la monture sélectionnée est cerclée (figure 1), la lentille ophtalmique 30 est plus précisément destinée à être détourée pour présenter sur sa tranche 33 une nervure d'emboîtement (ou biseau) apte à s'emboîter dans le drageoir du cercle 11 correspondant de la monture de lunettes 10.

Dans le cas où la monture sélectionnée est semi-cerclée (figure 2), la lentille ophtalmique 30 est au contraire destinée à être détourée pour présenter sur sa tranche 33 une rainure d'emboîtement qui est apte à être engagée sur la nervure d'emboîtement de l'arcade 21A correspondante de la monture de lunettes et qui est apte à accueillir le fil nylon 21B.

Cette lentille ophtalmique 30 est pourvue de marquages 34, 35 qui permettent un repérage commode du référentiel optique de la lentille ophtalmique 30 pour son montage sur la monture de lunettes 10, 20 sélectionnée par le porteur. Ces marquages consistent ici en des marquages provisoires 34, 35 à l'encre. Ils pourraient en variante consister en des marquages permanents, tels que des micro-gravures.

Ici, ces marquages comportent une croix de centrage 34 permettant de repérer la position du point de centrage de la lentille c'est-à-dire, dans le cas d'une lentille ayant une puissance optique exclusivement sphérique, le point où le rayon incident et le rayon transmis ont même axe.

Il comporte en outre, de part et d'autre de cette croix de centrage 34, deux traits d'horizon 35 repérant l'horizontale de la lentille ophtalmique 30.

On caractérise alors le référentiel optique de la lentille ophtalmique 30 par une repère orthonormé comportant un axe horizontal X2 parallèle auxdits traits d'horizon 35, un axe d'ordonnée Y2, et un axe normal Z2 qui est parallèle à l'axe général A3 de la lentille (cet axe général étant perpendiculaire au plan tangent à la face avant de la lentille ophtalmique 30 au point de centrage 34).

L'invention présente un avantage particulier lorsque la préparation des lentilles est confiée à des fabricants de lentilles distincts des opticiens, c'est-à-dire lorsque les opticiens agissent en « donneurs d'ordre » qui sous-traitent la fabrication et le détourage des lentilles à de tels fabricants.

Pour illustrer cette configuration, on considérera ici, d'une part, un terminal-client installé du coté d'un opticien pour la commande de lentilles, et, d'autre part, un terminal-fabricant installé du côté d'un fabricant de lentilles pour la fabrication et le détourage de lentilles.

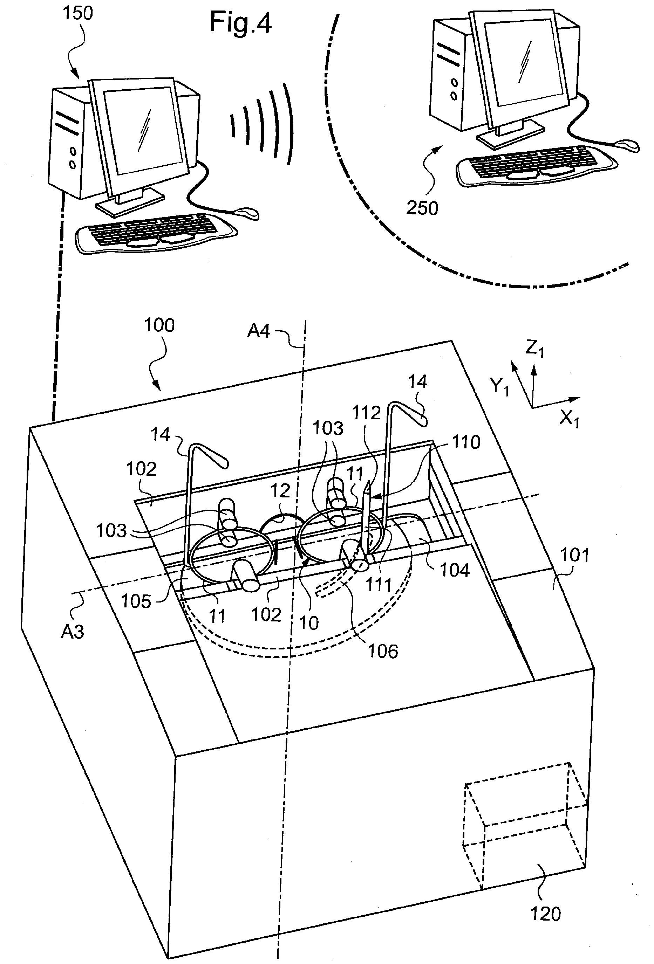

Le terminal-client comporte une unité informatique 150 (figure 4), ici un ordinateur de bureau, pour enregistrer et transmettre des données de commande de lentilles ophtalmiques, par exemple via un protocole de communication par IP (de type Internet). Ces données de commande comportent des données de prescription relatives aux corrections à apporter aux yeux du porteur et des données de forme relatives à la monture de lunettes 10, 20 sélectionnée par le porteur.

Le terminal-fabricant comporte quant à lui une unité informatique 250 pour recevoir, enregistrer et traiter les données de commande transmises par le terminal-client. Il comporte en outre un dispositif de détourage de lentilles conformément aux données de forme.

Dans le terminal-client, l'opticien dispose ici d'un appareil de lecture de contours. Cet appareil de lecture de contours est un moyen bien connu de l'homme du métier et ne fait pas en propre l'objet de l'invention décrite. Il est par exemple possible d'utiliser un appareil de lecture de contours tel que décrit dans le brevet EP 0 750 172 ou commercialisé par Essilor International sous la marque Kappa ou sous la marque Kappa CT.

La figure 4 est une vue générale de cet appareil de lecture de contours 100, tel qu'il se présente à son utilisateur. Cet appareil comporte un capot supérieur 101 recouvrant l'ensemble de l'appareil à l'exception d'une portion supérieure centrale dans laquelle peut être est disposée une monture de lunettes 10 ou une lentille de présentation 27.

L'appareil de lecture de contours 100 est destiné à relever, dans le cas où la monture de lunettes sélectionnée est cerclée, la forme de l'arête de fond du drageoir de chaque cercle 11 de cette monture de lunettes 10. Il est en revanche destiné à relever, dans le cas où la monture de lunettes sélectionnée est semi-cerclée, la forme du contour de chaque lentille de présentation 27.

L'appareil de lecture de contours 100 comporte à cet effet des premiers moyens de blocage d'une monture de lunettes 10 cerclée, et des seconds moyens de blocage d'une lentille de présentation 27.

Les premiers moyens de blocage comportent un jeu de deux mâchoires 102 mobiles l'une par rapport à l'autre pour former un dispositif de serrage. Chacune des mâchoires 102 est munie de deux paires de plots 103 mobiles pour former deux pinces adaptées à serrer la monture de lunettes 10 afin de l'immobiliser.

Les seconds moyens de blocage, non visibles sur les figures, comportent un ergot qui s'étend jusque dans la portion supérieure centrale de l'appareil, et dont l'extrémité supérieure est agencée pour coopérer avec l'une des faces de la lentille de présentation 27, afin de l'immobiliser dans cette portion supérieure centrale.

Dans l'espace laissé visible par l'ouverture du capot 101, un châssis 104 est visible. Une platine (non visible) peut se déplacer en translation sur ce châssis 104 selon un axe de transfert A3. Sur cette platine est monté tournant un plateau tournant 105.

Ce plateau tournant 105 est donc apte à prendre trois positions sur l'axe de transfert A3, dont :

- une première position dans laquelle le centre du plateau tournant 105 est disposé entre les deux paires de plots 103 fixant le cercle droit de la monture de lunettes 10,
- une seconde position dans laquelle le centre du plateau tournant 105 est disposé entre les deux paires de plots 103 fixant le cercle gauche de la monture de lunettes 10, et
- une troisième position intermédiaire dans laquelle le centre du plateau tournant 105 est situé dans l'axe de l'ergot de fixation de la lentille de présentation 27.

Le plateau tournant 105 possède un axe de rotation A4 défini comme l'axe normal à la face avant de ce plateau tournant 105 et passant par son centre. Il est adapté à pivoter autour de cet axe par rapport à la platine. Le plateau tournant 105 comporte par ailleurs une lumière 106 oblongue en forme d'arc de cercle à travers laquelle un palpeur 110 fait saillie. Ce palpeur 110 comporte une tige support 111 d'axe perpendiculaire au plan de la face avant du plateau tournant 105 et, à son extrémité libre, un doigt de palpage 112 d'axe perpendiculaire à l'axe de la tige support 111.

Le doigt de palpage 112 est agencé pour suivre par glissement ou éventuellement roulement l'arête de fond du drageoir de chaque cercle 11 de la monture de lunettes 10.

La tige support 111 est quant à elle agencée pour glisser le long du contour de la lentille de présentation 27.

L'appareil de lecture de forme 100 comporte des moyens d'actionnement (non représentés) adaptés, d'une première part, à faire glisser la tige support 111 le long de la lumière 106 afin de modifier sa position radiale par rapport à l'axe de rotation A4 du plateau tournant 105, d'une deuxième part, à faire varier la position angulaire du plateau tournant 105 autour de son axe de rotation A4, et, de troisième part, à positionner le doigt de palpage 112 du palpeur 110 à une altitude plus ou moins importante par rapport au plan de la face avant du plateau tournant 105.

En résumé, le palpeur 110 est pourvu de trois degrés de liberté, dont un premier degré de liberté p constitué par l'aptitude du palpeur 110 à se mouvoir radialement par rapport à l'axe de rotation A4 grâce à sa liberté de mouvement le long de l'arc de cercle formé par la lumière 106, un deuxième degré de liberté θ constitué par l'aptitude du palpeur 110 à pivoter autour de l'axe de rotation A4 grâce à la rotation du plateau tournant 105 par rapport à la platine, et un troisième degré de liberté z constitué par l'aptitude du palpeur 110 à se translater selon un axe parallèle à l'axe de rotation A4 du plateau tournant 105.

Chaque point lu par l'extrémité du doigt de palpage 112 du palpeur 110 est repéré dans un référentiel, appelé référentiel de porté de la monture.

Ce référentiel est ici caractérisé par un repère orthonormé comportant un axe horizontal X1 parallèle audit axe de transfert A3, un axe d'ordonnée Y1 orthogonal aux axes de transfert A3 et de rotation A4, et un axe normal Z1.

L'appareil de lecture de contours 100 comporte en outre un dispositif électronique et/ou informatique 120 permettant, d'une part, de piloter les moyens d'actionnement de l'appareil de lecture de forme 100, et, d'autre part, d'acquérir et de transmettre à l'unité informatique 150 les coordonnées de l'extrémité du doigt de palpage 112 du palpeur 110.

Le procédé de préparation d'une lentille ophtalmique 30 en vue de son montage dans un entourage 11, 21 d'une monture de lunettes 10, 20 comporte deux phases principales, dont une première phase d'élaboration d'une consigne de détourage, et une seconde phase de détourage de la lentille ophtalmique suivant cette consigne de détourage.

La seconde phase de détourage se déroule généralement en trois opérations successives, dont :

- une opération d'ébauche de détourage qui consiste à ramener le contour initialement circulaire de la lentille ophtalmique à une forme proche de celle désirée, c'est-à-dire à une forme proche de celle de l'entourage de la monture de lunettes sélectionnée,
- une opération de finition qui consiste à former une nervure d'emboîtement ou une rainure d'emboîtement sur la tranche de la lentille ophtalmique en vue de son montage sur une monture de lunettes respectivement cerclée ou semi-cerclée, et,
- une opération de surfinition qui consiste à polir la tranche de la lentille et/ou à chanfreiner ses arêtes vives.

L'invention portant plus précisément sur la première phase d'élaboration de la consigne de détourage, cette seconde phase de détourage bien connue de l'Homme du métier ne sera pas ici décrite en détail.

La première phase d'élaboration de la consigne de détourage se décompose en six opérations successives.

La première opération consiste à définir les besoins du porteur de lunettes.

Pour cela, le porteur se rend chez un opticien.

L'opticien propose quant à lui au porteur de sélectionner une monture de lunettes 10, 20 qui lui convient, ici une monture de lunettes cerclée ou semi-cerclée. Il procède ensuite aux mesures nécessaires au centrage des lentilles ophtalmiques sur la monture sélectionnée, de manière qu'une fois assemblées à la monture, les lentilles soient correctement centrées en regard des yeux du porteur afin d'exercer au mieux les fonctions optiques pour lesquelles elles sont conçues.

L'opticien détermine en particulier la position des points pupillaires du porteur dans le référentiel de porté de la monture. Ces points pupillaires correspondent aux points disposés en regard des pupilles du porteur sur les lentilles équipant la monture sélectionnée. Les points pupillaires sont plus particulièrement repérés par rapport au contour de chaque entourage 11, 21 de la monture de lunettes 10, 20 sélectionnée, au moyen de deux paramètres appelés écart pupillaire et hauteur pupillaire. L'écart pupillaire correspond à la plus grande distance horizontale entre le point pupillaire et la zone nasale de l'entourage. La hauteur pupillaire correspond à la plus grande distance verticale entre le point pupillaire et la zone basse de l'entourage.

La seconde opération consiste à acquérir les formes des contours des entourages 11, 21 de la monture de lunettes 10, 20 sélectionnée.

Cette étape d'acquisition peut être réalisée de différentes manières.

Elle est ici réalisée en palpant les cercles 11 de la monture de lunettes cerclée 10 ou les lentilles de présentation 27 de la monture de lunettes semi-cerclée 20.

Cette étape d'acquisition est ici menée sur l'appareil de lecture de contours 100 représenté sur la figure 4.

Pour cela, dans un premier temps, la monture de lunettes 10 ou la lentille de présentation 27 est immobilisée dans les premiers ou seconds moyens de blocage de l'appareil de lecture de contours 100.

S'il s'agit d'une monture de lunettes cerclée, cette dernière est immobilisée de telle sorte que chacun de ses cercles 11 est prêt à être palpé selon un trajet qui démarre entre les deux plots 103 enserrant la partie inférieure du cercle 11 correspondant de la monture, et qui suit le drageoir du cercle 11 afin de couvrir toute la circonférence de ce cercle 11.

En position initiale, lorsque le doigt de palpage 112 est disposé entre les deux plots 103, le dispositif électronique et/ou informatique 120 définit comme nulles la position angulaire $\theta_1$ et l'altitude $z_1$ de l'extrémité du doigt de palpage 112 du palpeur 110.

Les moyens d'actionnement font ensuite pivoter le plateau tournant 105 sur une révolution complète. Lors de ce pivotement, les moyens d'actionnement imposent un effort radial constant sur le palpeur 110 en direction du cercle 11, pour que le doigt de palpage 112 du palpeur 110 glisse le long de l'arête de fond du drageoir du cercle 11, sans remonter le long des flancs avant et arrière du drageoir.

Le dispositif électronique et/ou informatique 120 relève pendant la rotation du plateau tournant 105 les coordonnées spatiales $\rho_i$, $\theta_i$, $z_i$ d'une pluralité de points $Q_i$ de l'arête de fond du drageoir (par exemple 60 points séparés angulairement de 6 degrés), repérés dans le repère $X_1$, $Y_1$, $Z_1$, qui définissent ensemble un profil longitudinal 50 de l'entourage 11.

S'il s'agit d'une monture de lunettes semi-cerclée, l'une de ses lentilles de présentation 27 est immobilisée au centre de l'ouverture supérieure centrale du capot 101, de manière à ce que sa tranche puisse être palpée sur l'ensemble de son contour par la tige support 111.

En position initiale, lorsque la tige support 111 est disposé contre la tranche de la lentille de présentation 27, le dispositif électronique et/ou informatique 120 définit comme nulle la position angulaire $\theta_1$ du palpeur 110.

Les moyens d'actionnement font ensuite pivoter le plateau tournant 105. Lors de ce pivotement, les moyens d'actionnement imposent un effort radial constant sur le palpeur 110 en direction de l'axe de rotation A4, pour que la tige support 111 du palpeur 110 reste au contact de la tranche de la lentille de présentation 27.

Le dispositif électronique et/ou informatique 120 relève pendant la rotation du plateau tournant 105 les coordonnées planes $\rho_i$, $\theta_i$ d'une pluralité de points $P_i$ de la tranche de la lentille de présentation 27 (par exemple 60 points séparés angulairement de 1 degré). Ces 60 points palpés $P_i$ définissent ici également un profil longitudinal de l'entourage 21 de la monture de lunettes semi-cerclée.

Puis, quel que soit le type cerclé ou semi-cerclé de la monture de lunettes sélectionnée, les coordonnées planes $\rho_i$, $\theta_i$ des 60 points palpés $P_i$ sont ensuite transmises par le dispositif électronique et/ou informatique 120 à l'unité informatique 150 du terminal-client.

Bien entendu, cette étape d'acquisition pourrait également être réalisée autrement.

Elle pourrait par exemple être réalisée à l'aide d'un registre de base de données. Un tel registre comporterait à cet effet une pluralité d'enregistrements qui seraient chacun associés à un modèle de montures de lunettes et qui comprendraient chacun les cordonnées d'une pluralité de points caractérisant les formes des entourages de ce modèle de montures de lunettes.

A l'issue de cette seconde opération, l'unité informatique 150 du terminal-client transmet l'ensemble des données acquises à l'unité informatique 250 du terminal-fabricant.

Ces données sont alors utilisées pour détourer les lentilles ophtalmiques afin de ramener leurs contours à la forme souhaitée, comme cela sera détaillé dans la suite de cet exposé.

La troisième opération consiste à centrer et orienter le profil longitudinal 50 de l'entourage 11, 21 sur la lentille ophtalmique 30 de telle manière qu'une fois assemblée à la monture de lunettes, la lentille détourée suivant ce profil longitudinal 50 se trouve convenablement centrée en regard de la pupille de l'oeil correspondant du porteur.

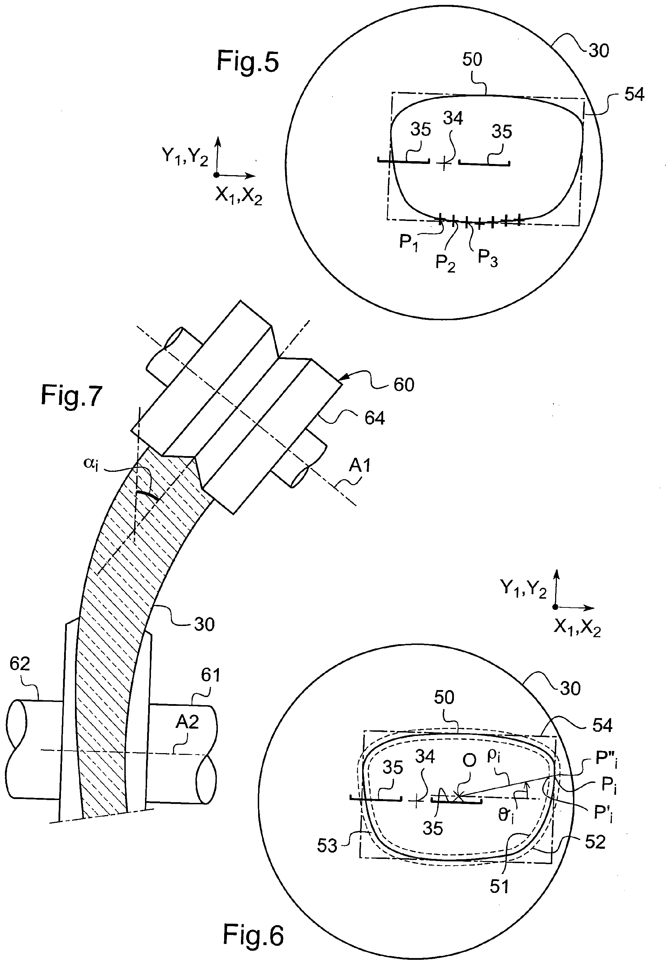

A l'étape de centrage, comme le montre la figure 5, il s'agit de mettre le référentiel de porté de la monture de lunettes 10, 20 en coïncidence avec le référentiel optique de la lentille ophtalmique 30.

Cette mise en coïncidence est réalisée en alignant les axes horizontaux $X_1$, $X_2$, les axes d'ordonnée $Y_1$, $Y_2$, et les axes normaux $Z_1$, $Z_2$ des repères associés à ces deux référentiels, puis en centrant le point pupillaire (et donc le profil longitudinal 50) repéré dans le repère $X_1, Y_1, Z_1$ de la monture sur le point de centrage 34 repéré dans le repère $X_2, Y_2, Z_2$ de la lentille.

A l'étape d'orientation, il s'agit d'orienter le profil longitudinal 50 de l'entourage 11, 21 autour du point de centrage 34 suivant un angle déterminé par rapport aux traits d'horizon 35 de lentille ophtalmique 30. Cet angle est choisi en fonction des prescriptions du porteur. Il permet de s'assurer qu'une fois la lentille montée dans l'entourage, la répartition de ses puissances optiques convienne à l'oeil correspondant du porteur. Tel que représenté sur la figure 5, l'angle choisi est de zéro degré.

L'invention porte alors plus précisément sur les quatrième, cinquième et sixième opérations.

A ce stade, comme le montre la figure 6, on connaît les coordonnées bidimensionnelles ($\rho_1$, $\theta_i$) des points $P_i$ du profil longitudinal 50 dans le repère (O, $X_2$, $Y_2$, $Z_2$) lié à la lentille ophtalmique 30.

Le centre O de ce repère correspond ici au centre du cadre boxing 54 du profil longitudinal 50.

On rappelle à cet effet que le cadre boxing 54 est le rectangle qui est circonscrit au profil longitudinal 50, et dont deux des côtés sont parallèles à l'horizontal.

La quatrième opération consiste alors à cartographier une partie de l'une au moins des deux faces optiques 31, 32 de la lentille ophtalmique 30.

En l'espèce, elle consiste plus précisément ici à cartographier la face optique arrière 32 de la lentille ophtalmique 30, sur une bande 53 de largeur déterminée qui s'étend le long du projeté du profil longitudinal 50 sur la face optique arrière de la lentille (ce projeté étant désormais appelé par simplification « profil longitudinal 50 »).

La forme sphérique de la face optique avant 31 de la lentille est en effet ici déjà connue et n'a donc pas à être cartographiée.

La cartographie d'une bande 53 seulement de la face arrière de la lentille permet ainsi d'obtenir rapidement les données qui, par la suite, permettront de détourer la lentille de manière optimale.

Cette opération de cartographie est menée à l'aide d'un appareil de palpage adapté à palper les faces optiques des lentilles.

L'architecture de cet appareil de palpage ne faisant pas l'objet de la présente, elle ne sera pas décrite en détail.

On retiendra seulement que cet appareil de palpage comporte au moins :

- un support de lentille, par exemple formé par deux arbres de serrage et d'entraînement en rotation de la lentille ophtalmique 30 autour de l'axe général A3,

- un moyen de palpage, par exemple formé par un bras mobile en translation suivant un axe parallèle à l'axe général A3 (pour que son extrémité puisse venir au contact de la face optique arrière 32 de la lentille ophtalmique 30) et mobile en translation suivant un axe radial par rapport à l'axe général A3 (pour que son extrémité puisse s'écarter de l'axe général A3 afin de pouvoir palper n'importe quel point de la face optique arrière 32 de la lentille), et

- un capteur permettant de repérer la position exacte de l'extrémité du bras de palpage, afin de relever les coordonnées de n'importe quel point de la face optique arrière 32 de la lentille.

La quatrième opération est mise en oeuvre en deux étapes dites de calcul et d'examen.

Succinctement, l'étape de calcul consiste à déterminer les coordonnées bidimensionnelles ($\rho'_i$, $\theta'_i$) et ($\rho''_i$, $\theta''_i$) d'une pluralité de points de mesure $P'_i$, $P''_i$ situés sur la face optique arrière 32 de la lentille ophtalmique 30, le long de deux brins longitudinaux 51, 52 qui délimitent entre eux ladite bande 53 que l'on souhaite cartographier.

L'étape d'examen consiste quant à elle à acquérir les coordonnées tridimensionnelles ($\rho'_i$, $\theta'_i$, $z'_i$) et ($\rho''_i$, $\theta''_i$, $z''_i$) desdits points de mesure $P'_i$, $P''_i$, ainsi qu'éventuellement les coordonnées tridimensionnelles ($\rho_i$, $\theta_i$, $z_i$) des points $P_i$ du profil longitudinal 50.

Au cours de l'étape de calcul, les deux brins longitudinaux 51, 52 sont choisis de manière à être suffisamment éloignés l'un de l'autre pour délimiter une bande 53 cartographiée de largeur suffisante, afin d'obtenir des résultats exploitables en vue du détourage de la lentille ophtalmique 30.

Ils sont ici définis comme étant situés de part et d'autre du profil longitudinal 50, et sont issus de deux transformations homothétiques de centre O et de rapport $Rh_{51}$, $Rh_{52}$.

Le rapport d'homothétie $Rh_{51}$ de l'une des transformations, celle aboutissant au brin longitudinal 51, est préférentiellement compris entre 0,7 et 0,95 et est ici égal à 0,85.

Le rapport d'homothétie $Rh_{52}$ de l'autre des transformations, celle aboutissant au brin longitudinal 52, est préférentiellement compris entre 1,05 et 1, 3 et est ici égal à 1,15.

En pratique, l'unité informatique 250 du terminal fabricant obtient les coordonnées bidimensionnelles ($\rho'_i$, $\theta'_i$) et ($\rho''_i$, $\theta''_i$) des points de mesure P'$_i$, P''$_i$ à l'aide du calcul suivant :

Pour i allant de 1 à 60,

$$\rho'_i = Rh_{51}.\rho_i$$

$$\rho''_i = Rh_{52}.\rho_i$$

$$\theta_i = \theta'_i = \theta''_i.$$

Au cours de l'étape d'examen, le bras de palpage est alors piloté de telle sorte que son extrémité vienne glisser sur la face optique arrière 32 de la lentille ophtalmique 30, le long du profil longitudinal 50 puis le long de chacun des deux brins longitudinaux 51, 52, de manière à relever les altitudes $z_i$, $z'_i$, $z''_i$ des points du profil longitudinal 50 et des deux brins longitudinaux 51, 52.

On obtient ainsi une cartographie de la bande 53 de la face optique arrière 32 de la lentille ophtalmique 30.

La cinquième opération consiste à déterminer la consigne de détourage de la lentille ophtalmique 30 en fonction :

- de la géométrie bidimensionnelle ou tridimensionnelle du profil longitudinal 50,
- de la position du profil longitudinal 50 dans le référentiel $X_2$, $Y_2$ lié à la lentille ophtalmique 30, et
- de la géométrie de la face optique arrière 32 de la lentille ophtalmique 30, le long de la bande 53 cartographiée.

Elle est suivie d'une sixième opération de détourage de la lentille ophtalmique 30 suivant ladite consigne de détourage.

Ces opérations seront mises en oeuvre de manière différente selon l'architecture du dispositif de détourage utilisé.

A titre d'exemple illustratif et non limitatif, on pourra utiliser une meuleuse 60 du type de celle représentée sur la figure 7, comportant :

- un support de lentille, par exemple formé par deux arbres 61, 62 de serrage et d'entraînement en rotation de la lentille ophtalmique 30 autour d'un axe A2, et
- une meulette de biseautage 63 entraînée en rotation autour d'un axe A1 et montée mobile de telle manière que son axe A1 présente une orientation et une distance réglables par rapport à l'axe A2.

Avec un tel dispositif, on peut prévoir que la cinquième opération comporte une étape de calcul de l'angle de courbure $\alpha_i$ de la lentille en chaque point P$_i$ du profil longitudinal 50, à l'aide notamment des coordonnées des points de mesure P'$_i$, P''$_i$.

La sixième étape pourra alors comporter une étape de biseautage de la lentille ophtalmique 30 suivant le profil longitudinal 50, de telle manière qu'en chaque point P$_i$ du profil longitudinal 50, l'axe A1 de la meule de biseautage 63 soit inclinée d'un angle égal à l'angle de courbure $\alpha_i$.

Ainsi, la lentille biseautée comportera à l'issue de ces opérations un biseau présentant une orientation optimale sur son chant.

De la même manière, si la lentille est destinée à être montée sur une monture de lunettes semi-cerclée (figure 2) et que son chant doit donc être rainurée, on pourra grâce à l'invention prévoir d'incliner cette rainure de manière à assurer un montage optimal de la lentille sur sa monture.

Bien entendu, on pourrait selon l'invention détourer la lentille de différentes autres manières, pour autant qu'on utilise les altitudes $z'_i$, $z''_i$ des points de mesure des deux brins longitudinaux 51, 52 de manière à améliorer la qualité du détourage de la lentille.

La présente invention n'est nullement limitée au mode de réalisation décrit et représenté.

A titre d'exemple, on pourra prévoir que les brins longitudinaux qui délimitent la bande à cartographier soient issus, non pas de deux transformations homothétiques, mais plutôt de deux transformations à écart constant.

En pratique, l'unité informatique 250 du terminal fabricant obtiendrait alors les coordonnées bidimensionnelles ($\rho'_i$, $\theta'_i$) et ($\rho''_i$, $\theta''_i$) des points de mesure P'$_i$, P''$_i$ à l'aide des calculs suivants :

Pour i allant de 1 à 60,

$$\rho'_i = \rho_i - C_{51}$$

$$\rho''_i = \rho_i + C_{52}$$

$\theta_i = \theta'_i = \theta''_i$, avec $C_{51}$ et $C_{52}$ deux constantes prédéterminées.

On pourrait aussi prévoir que la bande à cartographier s'étende non pas de part et d'autre du profil longitudinal mais qu'elle s'étende d'un côté seulement de ce profil. On pourrait en particulier prévoir que la bande à cartographier soit délimitée d'un côté par le profil longitudinal lui-même.

On pourrait également prévoir que les deux brins longitudinaux présentent un écart au profil longitudinal qui varie de manière discontinue. On pourrait en particulier prévoir que cet écart soit égal à une première constante dans les parties haute et basse du profil longitudinal, et qu'il soit égale à une seconde constante (distincte de la première) dans les parties temporale et nasale du profil longitudinal.

Selon une autre variante de réalisation de l'invention, on pourra prévoir que l'acquisition des altitudes des points de mesure sur la face optique arrière de la lentille ophtalmique soit réalisée, non pas par palpage avec contact, mais au sans contact, par exemple à l'aide de moyens de mesure optique (au laser, par déflectométrie, ...).

On pourra bien entendu aussi relever les altitudes d'un plus grand nombre ou d'un nombre restreint de points de mesure. Ce nombre de points de mesure pourra bien entendu aussi être différent du nombre de points acquis le long du drageoir. On pourra ainsi acquérir les coordonnées de 360 points du drageoir afin d'assurer un détourage précis de la lentille suivant le profil longitudinal, et acquérir les coordonnées d'une cinquantaine de points de mesure sur chaque brin longitudinal afin d'obtenir une cartographie de ladite bande dont la précision est suffisante, compte tenu de la manière dont elle sera exploitée pour le détourage de la lentille.

Encore en variante, on pourrait prévoir que les altitudes des points de mesure soient utilisées, non pas lors du détourage de la lentille ophtalmique, mais plutôt au cours d'autre étapes de traitement de la lentille telles que lors des opérations de gravure et/ou de tamponnage des marques de centrage sur la lentille ophtalmique, de manière à positionner ces marques avec une grande précision, compte tenu de la forme de la lentille.

## Revendications

1.  Procédé de préparation d'une lentille ophtalmique (30) à emboîter dans un entourage (11, 21) d'une monture de lunettes (10, 20), comportant :

    - une opération de détermination de la géométrie bidimensionnelle d'un profil longitudinal (50) dudit entourage (11, 21),
    - une opération de centrage au cours de laquelle ledit profil longitudinal (50) est positionné dans un référentiel $(X_2, Y_2)$ lié à la lentille ophtalmique (30),
    - une opération d'acquisition de la géométrie d'au moins une partie d'une face optique (32) de la lentille ophtalmique (30), par palpage avec ou sans contact dudit profil longitudinal (50) sur ladite face optique (32) de la lentille ophtalmique (30),
    - une opération de détermination d'une consigne de traitement de la lentille ophtalmique (30) en fonction de la géométrie et de la position du profil longitudinal (50) dans le référentiel $(X_2, Y_2)$ lié à la lentille ophtalmique (30), et en fonction de la géométrie de ladite partie de ladite face optique (32) de la lentille ophtalmique (30), et

    - une opération de traitement de la lentille ophtalmique (30) suivant ladite consigne de traitement,

    **caractérisé en ce que** ladite opération d'acquisition comporte :

    - une étape de calcul, en fonction de la géométrie bidimensionnelle dudit profil longitudinal (50), des coordonnées bidimensionnelles d'une pluralité de points de mesure $(P'_i, P''_i)$ situés le long de deux brins longitudinaux (51, 52) distincts qui sont disposés de part et d'autre dudit profil longitudinal (50) et qui sont choisis de telle sorte qu'ils définissent entre eux une bande qui s'étend le long dudit profil longitudinal (50), et
    - une étape d'examen de ladite face optique (32) de la lentille ophtalmique (30) pour acquérir les coordonnées tridimensionnelles desdits points de mesure $(P'_i, P''_i)$,

    et **en ce que** ladite consigne de traitement est déterminée en fonction des coordonnées tridimensionnelles desdits points de mesure $(P'_i, P''_i)$.

2.  Procédé de préparation selon la revendication précédente, dans lequel, au cours de l'opération de détermination, on acquiert les coordonnées bidimensionnelles d'une pluralité de points élémentaires $(P_i)$ qui appartiennent au profil longitudinal (50) et qui sont caractéristiques de la géométrie bidimensionnelle du profil longitudinal (50), et au cours de l'étape de calcul, les points de mesure $(P'_i, P''_i)$ sont choisis comme étant chacun associés à l'un des points élémentaires $(P_i)$ du profil longitudinal (50).

3.  Procédé de préparation selon l'une des revendications 1 et 2, dans lequel les deux brins longitudinaux (51, 52) sont des homothéties du profil longitudinal (50).

4.  Procédé de préparation selon l'une des revendications 1 et 2, dans lequel les deux brins longitudinaux (51, 52) sont des transformations à écart constant du profil longitudinal (50).

5.  Procédé de préparation selon l'une des revendications précédentes, dans lequel au cours de l'étape d'examen, ladite face optique (32) de la lentille ophtalmique (30) est palpée suivant les deux brins longitudinaux (51, 52).

6.  Procédé de préparation selon la revendication précédente, dans lequel au cours de l'étape d'examen, ladite face optique (32) de la lentille ophtalmique (30) est également palpée suivant le profil longitudinal (50) pour acquérir les coordonnées tridimensionnelles de points élémentaires $(P_i)$ de ce profil longitudi-

nal (50), et dans lequel ladite consigne de traitement est calculée en fonction des coordonnées tridimensionnelles desdits points élémentaires ($P_i$).

7. Procédé de préparation selon l'une des revendications précédentes, dans lequel au cours de l'étape d'examen, on acquiert les coordonnées tridimensionnelles de trois points de l'autre face optique (31) de la lentille ophtalmique (30) et on en déduit le rayon de courbure (Rc) de cette autre face optique (31), et dans lequel ladite consigne de traitement est calculée en fonction de ce rayon de courbure (Rc).

8. Procédé de préparation selon l'une des revendications précédentes, dans lequel l'opération de traitement comporte une étape de détourage de la lentille ophtalmique (30).

9. Procédé de préparation selon l'une des revendications précédentes, dans lequel l'opération de traitement comporte une étape de gravure et/ou de tamponnage de la lentille ophtalmique (30).

**Patentansprüche**

1. Verfahren zur Vorbereitung einer in eine Einfassung (11, 21) eines Brillengestells (10, 20) einzufügenden ophthalmischen Linse (30), das aufweist:

  - einen Vorgang der Bestimmung der zweidimensionalen Geometrie eines Längsprofils (50) der Einfassung (11, 21),
  - einen Zentriervorgang, während dessen das Längsprofil (50) in einem mit der ophthalmischen Linse (30) verbundenen Bezugssystem ($X_2$, $Y_2$) positioniert wird,
  - einen Vorgang der Erfassung der Geometrie mindestens eines Teils einer optischen Seite (32) der ophthalmischen Linse (30), durch Abtasten mit oder ohne Kontakt des Längsprofils (50) auf der optischen Seite (32) der ophthalmischen Linse (30),
  - einen Vorgang der Bestimmung eines Verarbeitungssollwerts der ophthalmischen Linse (30) abhängig von der Geometrie und der Position des Längsprofils (50) im mit der ophthalmischen Linse (30) verbundenen Bezugssystem ($X_2$, $Y_2$) und abhängig von der Geometrie des Teils der optischen Seite (32) der ophthalmischen Linse (30), und
  - einen Vorgang der Verarbeitung der ophthalmischen Linse (30) gemäß dem Verarbeitungssollwert,

  **dadurch gekennzeichnet, dass** der Erfassungsvorgang aufweist:

  - einen Schritt der Berechnung, abhängig von der zweidimensionalen Geometrie des Längsprofils (50), der zweidimensionalen Koordinaten einer Vielzahl von Messpunkten ($P'_i$, $P''_i$), die sich entlang von zwei unterschiedlichen Längsfäden (51, 52) befinden, die auf beiden Seiten des Längsprofils (50) angeordnet sind und die so ausgewählt werden, dass sie zwischen sich einen Streifen definieren, der sich entlang des Längsprofils (50) erstreckt, und
  - einen Schritt der Untersuchung der optischen Seite (32) der ophthalmischen Linse (30), um die dreidimensionalen Koordinaten der Messpunkte ($P'_i$, $P''_i$) zu erfassen,

  und dass der Verarbeitungssollwert abhängig von den dreidimensionalen Koordinaten der Messpunkte ($P'_i$, $P''_i$) bestimmt wird.

2. Vorbereitungsverfahren nach dem vorhergehenden Anspruch, wobei während des Bestimmungsvorgangs die zweidimensionalen Koordinaten einer Vielzahl von Elementarpunkten ($P_i$) erfasst werden, die zum Längsprofil (50) gehören und die für die zweidimensionale Geometrie des Längsprofils (50) charakteristisch sind, und während des Berechnungsschritts die Messpunkte (P'i, P''i) als je einem der Elementarpunkte ($P_i$) des Längsprofils (50) zugeordnet gewählt werden.

3. Vorbereitungsverfahren nach einem der Ansprüche 1 und 2, wobei die zwei Längsfäden (51, 52) Homothetien des Längsprofils (50) sind.

4. Vorbereitungsverfahren nach einem der Ansprüche 1 und 2, wobei die zwei Längsfäden (51, 52) Transformationen mit konstantem Abstand des Längsprofils (50) sind.

5. Vorbereitungsverfahren nach einem der vorhergehenden Ansprüche, wobei während des Untersuchungsschritts die optische Seite (32) der ophthalmischen Linse (30) gemäß den zwei Längsfäden (51, 52) abgetastet wird.

6. Vorbereitungsverfahren nach dem vorhergehenden Anspruch, wobei während des Untersuchungsschritts die optische Seite (32) der ophthalmischen Linse (30) ebenfalls gemäß dem Längsprofil (50) abgetastet wird, um die dreidimensionalen Koordinaten von Elementarpunkten ($P_i$) dieses Längsprofils (50) zu erfassen, und wobei der Verarbeitungssollwert abhängig von den dreidimensionalen Koordinaten der Elementarpunkte ($P_i$) berechnet wird.

7. Vorbereitungsverfahren nach einem der vorhergehenden Ansprüche, wobei während des Untersuchungsschritts die dreidimensionalen Koordinaten von drei Punkten der anderen optischen Seite (31) der ophthalmischen Linse (30) erfasst werden, und daraus der Krümmungsradius (Rc) dieser anderen optischen Seite (31) erfasst wird, und wobei der Verarbeitungssollwert abhängig von diesem Krümmungsradius (Rc) berechnet wird.

8. Vorbereitungsverfahren nach einem der vorhergehenden Ansprüche, wobei der Verarbeitungsvorgang einen Schritt des Formschneidens der ophthalmischen Linse (30) aufweist.

9. Vorbereitungsverfahren nach einem der vorhergehenden Ansprüche, wobei der Verarbeitungsvorgang einen Schritt der Ätzung und/oder des Tampondrucks der ophthalmischen Linse (30) aufweist.

## Claims

1. A method for preparing an ophthalmic lens (30) to be fitted into a rim (11, 21) of a spectacle frame (10, 20), comprising:

    - an operation for determining the two-dimensional geometry of a longitudinal profile (50) of said rim (11, 21);
    - a centering operation in which said longitudinal profile (50) is positioned in a frame of reference $(X_2, Y_2)$ related to the ophthalmic lens (30);
    - an operation for acquiring the geometry of at least one portion of an optical face (32) of the ophthalmic lens (30), by contact or contactless probing of said longitudinal profile (50) on said optical face (32) of the ophthalmic lens (30);
    - an operation for determining instructions for processing of the ophthalmic lens (30) depending on the geometry and position of the longitudinal profile (50) in the frame of reference $(X_2, Y_2)$ related to the ophthalmic lens (30), and depending on the geometry of said portion of said optical face (32) of the ophthalmic lens (30); and
    - an operation for processing the ophthalmic lens (30) according to said processing instructions,

    **characterized in that** said acquiring operation comprises:

    - a step of calculating, depending on the two-dimensional geometry of said longitudinal profile (50), two-dimensional coordinates of a plurality of measuring points $(P'_i, P''_i)$ located along two separate longitudinal traces (51, 52) that are arranged on either side of said longitudinal profile (50) and that are chosen such that they define between each other a strip that extends along said longitudinal profile (50); and
    - a step of examining said optical face (32) of the ophthalmic lens (30) in order to acquire the three-dimensional coordinates of said measuring points $(P'_i, P''_i)$,

and **in that** said processing instructions are determined depending on the three-dimensional coordinates of said measuring points $(P'_i, P''_i)$.

2. The preparing method as claimed in the preceding claim, in which, in the determining operation, the two-dimensional coordinates of a plurality of elementary points $(P_i)$ are acquired, which points belong to the longitudinal profile (50) and characterize the two-dimensional geometry of the longitudinal profile (50), and, in the calculating step, the measuring points $(P'_i, P''_i)$ chosen are each associated with one of the elementary points $(P_i)$ of the longitudinal profile (50).

3. The preparing method as claimed in one of claims 1 and 2, in which the two longitudinal traces (51, 52) are homotheties of the longitudinal profile (50).

4. The preparing method as claimed in either of claims 1 and 2, in which the two longitudinal traces (51, 52) are constant difference transformations of the longitudinal profile (50).

5. The preparing method as claimed in one of the preceding claims, in which, in the examining step, said optical face (32) of the ophthalmic lens (30) is probed along the two longitudinal traces (51, 52).

6. The preparing method as claimed in the preceding claim, in which, in the examining step, said optical face (32) of the ophthalmic lens (30) is also probed along the longitudinal profile (50) in order to acquire the three-dimensional coordinates of elementary points $(P_i)$ of this longitudinal profile (50), and in which said processing instructions are calculated depending on the three-dimensional coordinates of said elementary points $(P_i)$.

7. The preparing method as claimed in one of the preceding claims, in which, in the examining step, the three-dimensional coordinates of three points of the other optical face (31) of the ophthalmic lens (30) are acquired, and the radius of curvature (Rc) of this other optical face (31) is deduced therefrom, and in which said processing instructions are calculated depending on this radius of curvature (Rc).

8. The preparing method as claimed in one of the preceding claims, in which the processing operation comprises a step of trimming the ophthalmic lens (30).

9. The preparing method as claimed in one of the preceding claims, in which the processing operation comprises a step of etching and/or stamping the ophthalmic lens (30).

## Fig.1

$Y_1$

$X_1$

$Z_1$

14

15

12

13

13

11

11

10

14

15

## Fig.2

21

24

21

25

21A

21A

22

25

24

27

23

21B

27

23

23

21B

$Y_1$

$X_1$

$Z_1$

20

## Fig.3

$Z_2$

$Y_2$

$X_2$

31

34

35

30

32

A3

33

Fig.4

Fig.5

$Y_1, Y_2$

$X_1, X_2$

50

35 34 35

$P_1$

$P_2$ $P_3$

30

54

Fig.7

$\alpha_i$

60

64

A1

30

62

61

A2

$Y_1, Y_2$

$X_1, X_2$

50

30

54

35 34 O $\rho_i$

35

53

35

51

52

$P''_i$

$P_i$

$P'_i$

$\theta_i$

Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0750172 A